# EUROPÄISCHE PATENTSCHRIFT

(11) **EP 1 927 220 B1**
(45) Veröffentlichungstag und Bekanntmachung des Hinweises auf die Patenterteilung: **27.08.2014**
(21) Anmeldenummer: 06792007.4
(22) Anmeldetag: 12.09.2006
(51) Int. Cl.: H04L 12/801, H04L 29/06, H04L 12/743, H04L 12/851, H04L 12/853

(54) **Kommunikationsnetz, Netzwerkknoten-Vorrichtung und Verfahren mit einer geräteninternen Übertragung verschlüsselter dienstgüterelevanten Information**
Communications network, network node device and method including a local transmission of encrypted service quality-relevant information
Réseau de communication, système de noeud de réseau et procédé faisant appel à une transmission en mode autonome d'informations codées relatives à la qualité de service

(30) Priorität: 20.09.2005 DE 102005044901; 19.10.2005 DE 102005050174
(43) Veröffentlichungstag der Anmeldung: 04.06.2008
(73) Patentinhaber: Rohde & Schwarz GmbH & Co. KG, 81671 München (DE)
(72) Erfinder: FOAG, Jürgen, 81375 München (DE)
(74) Vertreter: Körfer, Thomas
(86) Internationale Anmeldenummer: PCT/EP2006/008886
(87) Internationale Veröffentlichungsnummer: WO 2007/033782

(56) Entgegenhaltungen:
- EP-A2- 1 276 294
- US-A1- 2003 067 874

## Beschreibung

Die vorliegende Erfindung bezieht sich auf ein Kommunikationsnetz mit Netzwerkknoten-Vorrichtungen zur Daten- und Sprachkommunikation, das über integrierte zentrale Vorrichtungen verfügt und aus sicherheitsrelevanten Gründen einen Teil der geräteinternen Datenverarbeitung mit verschlüsselten Daten und somit insbesondere mit verschlüsselten Dienstgütedaten durchführt. Die Netzwerkknoten-Vorrichtung soll zusammen mit weiteren gleich gearteten Netzwerkknoten-Vorrichtungen in einem verschlüsselten Kommunikationsnetz eingesetzt werden.

Aus der DE 101 33 648 A1 ist ein Verfahren zur Unterstützung von Dienstgütemerkmalen in heterogenen Kommunikationsnetzen bekannt, wobei das Verfahren im wesentlichen von einer Gatewayeinrichtung ausgeführt wird. In der Gatewayeinrichtung sind eine Gatewaysteuerung und mehrere Nutzdatengateways vorgesehen, wobei die Gatewaysteuerung eine Dienstgütesignalisierung erfaßt und abhängig davon eine Dienstgüteinformation zu einem Nutzdatengateway übermittelt. Durch den Nutzdatengateway werden spezifische Dienstgüteeigenschaften von Verbindungsabschnitten, die am Nutzdatengateway ankommen und/oder abgehen, erfasst und abhängig davon eine Dienstgüteeinstellung gemäß der übermittelten Dienstgüteinformation vorgenommen. Nachteilig bei dem in der DE 101 33 648 A1 beschriebenen Verfahren ist, dass die Dienstgüteeinstellung mittels unverschlüsselt übertragener Dienstgüteinformation erfolgt. Unverschlüsselt übertragene Dienstgüteinformation könnte von Unbefugten aus den übertragenen Datenströmen extrahiert werden und dazu benutzt werden, Datenübertragungen über das Kommunikationsnetz auf Kosten der authentifizierten Benutzer durchzuführen.

Die US 2003/0067874 A1 zeigt ein Kommunikationssystem und ein Verfahren zum Betrieb eines Kommunikationssystems, welche einen zentralen Speicher zur Vorhaltung von Kommunikationseinstellungen nutzen. Kommunikationsverkehr wird hinsichtlich der einzusetzenden Einstellungen untersucht. Kommunikationsprotokolle werden entsprechend eingestellt. Nachteilhaft an dem dort gezeigten Verfahren und dem dort gezeigten System ist, dass die Kommunikation einfach überwacht werden kann.

Der Erfindung liegt daher die Aufgabe zu Grunde, ein Kommunikationsnetz, mit Netzwerkknoten und ein Verfahren zu schaffen, um dienstgütespezifische Daten verschlüsselt zu übertragen, so dass Missbrauch der dienstgütespezifischen Daten verhindert werden kann.

Diese Aufgabe wird erfindungsgemäß durch das Kommunikationsnetz nach Anspruch 1 mit den in Anspruch 6 beschriebenen Netzwerkknoten-Vorrichtungen und durch das Verfahren nach Anspruch 15 gelöst. Vorteilhafte Weiterbildungen der Erfindung sind in den Unteransprüchen angegeben.

Die Erfindung geht von einer Netzwerkknoten-Vorrichtung zur Übertragung von dienstgütespezifischen Daten aus, wobei die Netzwerkknoten-Vorrichtung Endgerätesteuereinheiten, Leitungssteuereinheiten und einen zentralen Speicher umfasst. Über die Leitungssteuereinheiten besteht eine Verbindung zu einer Leitung eines erfindungsgemäßen Kommunikationsnetzes, das aus einer Topologie von Netzwerkknoten-Vorrichtungen besteht, wobei über die Endgerätesteuereinheiten der erfindungsgemäßen Netzwerkknoten-Vorrichtungen Endgeräte anschließbar sind. Die Leitungssteuereinheiten sind über eine zentrale Vorrichtung mit den Endgerätesteuereinheiten verbunden. In dem zentralen Speicher der erfindungsgemäßen Netzwerkknoten-Vorrichtung sind dienstgütespezifische Daten aller über die jeweilige Netzwerkknoten-Vorrichtung möglichen Verbindungen gespeichert. Die Endgerätesteuereinheiten und die Leitungssteuereinheiten dagegen weisen jeweils einen lokalen Speicher auf, der auf Anfrage bei dem zentralen Speicher dynamisch mit einer Teilmenge der dienstgütespezifischen Daten des zentralen Speichers aktualisierbar ist. Der zentrale Speicher und der zu jeder Endgerätesteuereinheit gehörige lokale Speicher befinden sich in einem unverschlüsselten Bereich. Der zu jeder Leitungssteuereinheit gehörige lokale Speicher befindet sich in einem vom unverschlüsselten Bereich. Diese Bereiche sind durch ein verschlüsselungsmodul getrennt. Eine verschlüsselte Übertragung von dienstgütespezifischen Daten zu den Leitungssteuereinheiten und gleichzeitig eine unverschlüsselte Übertragung von dienstgütespezifischen Daten zu den Endgerätesteuereinheiten sind so gewährleistet.

Angefragte dienstgütespezifische Daten werden von dem zentralen Speicher zu dem jeweils anfragenden, der Netzwerkknoten-Vorrichtung zugeordneten lokalen Speicher der Leitungssteuereinheiten zur Laufzeit übertragen. Die dienstgütespezifischen Daten werden dabei im sicherheitskritischen Bereich der Netzwerkknoten-Vorrichtung verschlüsselt übertragen und verarbeitet. Angefragte dienstgütespezifische Daten werden von dem zentralen Speicher zu dem lokalen Speicher der Endgerätesteuereinheiten unverschlüsselt weitergereicht werden.

Ein Vorteil der erfindungsgemäßen Netzwerkknoten-Vorrichtung ist, dass zusätzlich zu den Nutzdaten und den Kontrolldaten, die Informationen über die Topologie der an die Netzwerkknoten-Vorrichtung angeschlossen Netzwerke enthalten, auch die dienstgütespezifischen Kontrollinformationsdaten in dem sicherheitskritischen Bereich des Geräts verschlüsselt übermittelt, verarbeitet und gespeichert werden.

Weiterhin ist es von Vorteil, dass die dienstgütespezifischen Daten aller über das Kommunikationsnetz möglichen Verbindungen ausschließlich in einem zentralen Speicher abgelegt werden. Lediglich für einzelne Prozessorknoten relevante Anteile daraus werden in wesentlich kleineren Cache-Speichern abgelegt, die über geeignete Ersetzungsmechanismen für einzelne Einträge verfügen.

Ein weiterer Vorteil besteht darin, dass an den Leitungssteuereinheiten und an den Endgerätesteuereinheiten der erfindungsgemäßen Netzwerkknoten-Vorrichtung lokale Speicher vorgesehen sind, die jeweils eine kleinere Speicherkapazität als der zentrale Speicher aufweisen und nur eine Teilmenge der dienstgütespezifischen Daten aller über die jeweilige Netzwerkknoten-Vorrichtung möglichen Verbindungen enthalten.

Es ist von Vorteil, dass die Speicherinhalte der an den Leitungssteuereinheiten und an den Endgerätesteuereinheiten der erfindungsgemäßen Netzwerkknoten-Vorrichtung vorgesehenen lokalen Speicher dynamisch aktualisierbar sind, so dass in den lokalen Speichern sich überwiegend dienstgütespezifische Daten befinden, mit welchen aktuelle Datenströme klassifiziert und priorisiert werden. Ältere und nicht mehr benötigte dienstgütespezifische Daten in den lokalen Speichern werden vorteilhafterweise automatisch wieder aus den lokalen Speichern entfernt.

Aufgrund der dynamischen Aktualisierbarkeit der dienstgütespezifischen Daten in den lokalen Speichern müssen diese lokalen Speicher nicht alle dienstgütespezifischen Daten der über das Kommunikationsnetz möglichen Verbindungen enthalten. Daher benötigen die lokalen Speicher jeweils nur eine geringere Speicherkapazität als der zentrale Speicher.

Ein weiterer Vorteil der geringeren Speicherkapazität der lokalen Speicher an den Endgerätesteuereinheiten und den Leitungssteuereinheiten liegt darin, dass die Tabellensuchvorgänge zur Ermittlung der benötigten Dienstgüteklasse schneller durchgeführt werden können, was sich wiederum vorteilhaft auf eine Verkürzung der Durchlaufzeit der Datenströme an den Netzwerkknoten-Vorrichtungen auswirkt und somit auch die Verzögerungszeit verringert, die ein Datenpaket bei seinem Transport von einer Datenquelle zu einer Datensenke erfährt, wobei die sicherheitsrelevante Datenverarbeitung zu jeder Zeit gewährleistet ist.

Vorteilhafterweise ist in den erfindungsgemäßen Netzwerkknoten-Vorrichtungen ein Longest-Prefix-Match (LPM) Suchalgorithmus implementiert, der ebenfalls einen schnellen Tabellensuchvorgang, sowohl in dem zentralen Speicher als auch in den lokalen Speichern, nach der benötigten Dienstgüteklasse gewährleistet.

Von Vorteil ist außerdem, dass ein Datenholvorgang bezüglich der dienstgütespezifischen Daten nur einmal pro Datenstrom getätigt werden muss. Nachfolgende Pakete des gleichen Datenstroms, d.h. Pakete mit identischen dienstgütespezifischen Daten können den zugehörigen Tabelleneintrag der entsprechenden dienstgütespezifischen Daten im lokalen Speicher mit entsprechend geringen Verzögerungszeiten adressieren.

Es ist von Vorteil, dass der Aufwand zur Verschlüsselung von dienstgütespezifischen Daten zur Laufzeit und einer geeigneten Strategie zum dynamischen Editieren der Speicher gering ist.

Dadurch dass die Verzögerungszeiten an den NetzwerkknotenVorrichtungen minimiert sind, besteht die Möglichkeit Echtzeitanwendungen wie Audio- und/oder Videokommunikation zu unterstützen.

Es ist ebenfalls von Vorteil, dass die erfindungsgemäße Netzwerkknoten-Vorrichtung sowohl in einer räumlich festen Basisstation als auch in einem mobilen Endgerät implementiert bzw. integriert sein kann.

Ein Ausführungsbeispiel der Erfindung wird nachfolgend unter Bezugnahme auf die Zeichnung näher beschrieben. In der Zeichnung zeigen:
- Fig. 1: ein erfindungsgemäßes, Kommunikationsnetz mit einer im Detail dargestellten erfindungsgemäßen Netzwerkknoten-Vorrichtung;
- Fig. 2: ein Schema eines Steuerprogramms für verschieden klassifizierte Datenströme;
- Fig. 3: die Organisation eines zentralen Speichers sowie zugehöriger lokaler Cachespeicher einer erfindungsgemäßen Netzwerkknoten-Vorrichtung;
- Fig. 4: eine schematische Darstellung der Ermittlung der Dienstgüteklasse aus unterschiedlichen dienstgütespezifischen Daten;
- Fig. 5: eine Zuordnung von ausgewählten dienstgütespezifischen Daten zu einer definierten Dienstgüteklasse und
- Fig. 6: ein erfindungsgemäßes Kommunikationsnetz mit zwei im Detail dargestellten erfindungsgemäßen Netzwerkknoten-Vorrichtungen.

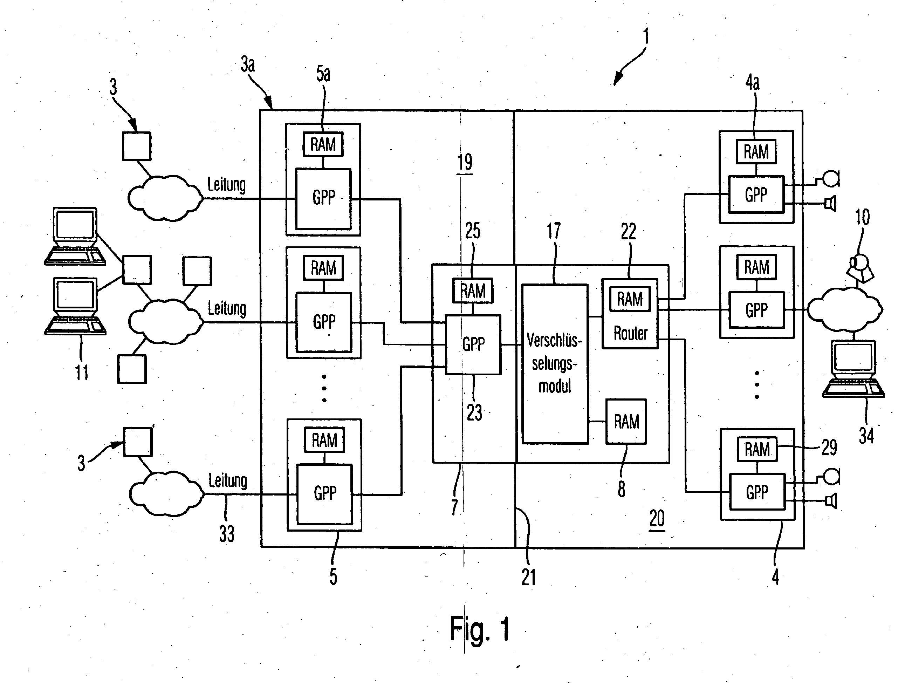

Fig. 1 zeigt ein erfindungsgemäßes Kommunikationsnetz 1 mit einer im Detail dargestellten erfindungsgemäßen Netzwerkknoten-Vorrichtung 3 zur Übertragung von Daten. Die erfindungsgemäße Netzwerkknoten-Vorrichtung 3 weist Endgerätesteuereinheiten 4, Leitungssteuereinheiten 5 und einen zentralen Speicher 8 auf, wobei über die Leitungssteuereinheiten 5 eine Verbindung zu einer Leitung 33 eines erfindungsgemäßen Kommunikationsnetzes 1 besteht und wobei über die Endgerätesteuereinheiten 4 Endgeräte 34 , wie z. B. Audioeinheiten anschließbar sind. Dabei kann die Leitung 33 entweder drahtgebunden oder drahtlos sein.

Die Leitungssteuereinheiten 5 der erfindungsgemäßen Netzwerkknoten-Vorrichtung 3 sind über eine zentrale Vorrichtung 7 mit den Endgerätesteuereinheiten 4 verbunden. In dem zentralen Speicher 8 der Netzwerkknoten-Vorrichtung 3 sind jeweils dienstgütespezifischen Daten 27 aller über das Kommunikationsnetz 1 möglichen Verbindungen gespeichert. Solche dienstgütespezifischen Daten 27 beziehen sich z. B. auf den unterschiedlichen Dätendurchsatz innerhalb eines aus verschiedenen Datenpaketen bestehenden Datenstroms, auf die Latenzzeit, d.h. die Verweilzeit einzelner Datenpakete im Netz, auf die Unterschiede in der Verweilzeit von Datenpaketen eines Datenstroms, auf die Verlustrate von Datenpaketen, auf die Fehlerrate und auf weitere verbindungs- oder anwendungsspezifische Daten.

Die Endgerätesteuereinheiten 4 und die Leitungssteuereinheiten 5 weisen jeweils einen lokalen Speicher 4a, 5a auf, die auf Anfrage bei dem zentralen Speicher 8 der Netzwerkknoten-Vorrichtung 3 dynamisch, d.h. zur Laufzeit mit einer Teilmenge 28 der dienstgütespezifischen'Daten 27 des zentralen Speichers 8 aktualisierbar sind.

Wird ein Datenstrom, der aus vielen einzelnen Datenpaketen besteht, in den Eridgeräteeinheiten 4 bzw. in den Leitungssteuereinheiten 5 einer NetzwerkknotenVorrichtung 3 weiterverarbeitet, so wird aus dem zu verarbeitenden Datenpaket des Datenstroms der Parameter Dienstgüteklasse anhand der Dienstgütezuordnungsvorschrift abgeleitet. Anhand dieses Parameters wird der gerade zu verarbeitende Datenstrom bzw. das zur Weiterverarbeitung anstehende Datenpaket des Datenstroms priorisiert behandelt oder in eine Warteschlange eingereiht. Bei einer priorisierten Behandlung des Datenpakets wird dieses ohne Verzögerung an eine nächste Adresse im Netz weitergeleitet. Damit diese Fallunterscheidung bei einem eintreffenden Datenstrom, der aus vielen einzelnen Datenpaketen besteht, getroffen werden kann, muss die Dienstgüteklasse mit den entsprechenden dienstgütespezifischen Daten 27 in dem lokalen Speicher 4a der Endgerätesteuereinheiten 4 bzw. in dem lokalen Speicher 5a der Leitungssteuereinheiten 5 abgelegt sein.

Ein eintreffender Datenstrom, dessen Dienstgüteklasse nicht in dem lokalen Speicher 4a, 5a enthalten ist, kann nicht weiterverarbeitet werden. Dem wird dadurch abgeholfen, dass der lokale Speicher 4a, 5a an einer Leitungssteuereinheit 5 oder an einer Endgerätesteuereinheit 4 an den zentralen Speicher 8 einer erfindungsgemäßen Netzwerkknoten-Vorrichtung 3 eine Anfrage übermittelt, die die benötigte Dienstgütezuordnungsregel 35 enthält. Bei Ankunft dieser Anfrage startet der zentrale Speicher 8 der erfindungsgemäßen Netzwerkknoten-Vorrichtung 3 einen Suchalgorithmus, um auf die angefragte Dienstgütezuordnungsregel 35 zuzugreifen. Sowohl in den Endgerätesteuereinheiten 4, in'den Leitungssteuereinheiten 5 als auch in der zentralen Vorrichtung 7 der erfindungsgemäßen Netzwerkknoten-Vorrichtung 3 ist jeweils vorzugsweise der Suchalgorithmus Longest-Prefix-Match (LPM) implementiert.

Innerhalb des verschlüsselten Bereichs 19 werden die von dem lokalen Speicher 5a der Leitungssteuereinheiten 5 angefragten dienstgütespezifischen Daten 27 verschlüsselt übertragen, wodurch ein Missbrauch verhindert werden kann.

Dabei werden von einem verschlüsselten Bereich 19 mittels verschlüsselter Eingangsdaten angefragte, unverschlüsselt im zentralen Speicher 8 der Netzwerkknoten-Vorrichtung 3 abgelegte dienstgütespezifischen Daten 27 mittels des Verschlüsselungsmoduls 17 verschlüsselt übertragen und verarbeitet.

Innerhalb der Netzwerkknoten-Vorrichtung 3 werden die von dem lokalen Speicher 4a der Endgerätesteuereinheiten 4 angefragten dienstgütespezifischen Daten 27 von dem zentralen Speicher 8 zu dem lokalen Speicher 4a der anfragenden Endgerätesteuereinheiten 4 an der selben, Netzwerkknoten-Vorrichtung 3 unverschlüsselt weitergereicht. Dadurch ist innerhalb der NetzwerkknotenVorrichtung 3 sowohl eine verschlüsselte Übertragung dienstgütespezifischer Daten 27 zu den Leitungssteuereinheiten 5 als auch eine unverschlüsselte Übertragung dienstgütespezifischer Daten 27 zu den Endgerätesteuereinheiten 4 gewährleistet.

In den erfindungsgemäßen Netzwerkknoten-Vorrichtungen 3 eines Kommunikationsnetzes 1 ist jeweils ein Bereich 19 mit verschlüsselten Datenströmen und ein Bereich 20 mit unverschlüsselten Datenströmen vorgesehen, die gegeneinander abgegrenzt sind, was bedeutet, dass unverschlüsselte Datenströme im verschlüsselten Bereich 19 nicht erlaubt sind. Als Schnittstelle 21 zwischen den beiden Bereichen 19, 20 ist das Verschlüsselungsmodul 17 innerhalb der zentralen Vorrichtung 7 der erfindungsgemäßen Netzwerkknoten-Vorrichtung 3 angeordnet.

In dem Bereich 20 mit den unverschlüsselten Datenströmen ist das Verschlüsselungsmodul 17 einerseits mit dem zentralen Speicher 8 und andererseits über einen integrierten, vermittelnden Netzknoten 22 mit den Eridgerätesteuereinheiten 4 verbunden.

In dem Bereich 19 mit den verschlüsselten Datenströmen ist innerhalb der zentralen Vorrichtung 7 eine mit dem Verschlüsselungsmodul 17 verbundene Prozessoreinheit 23 angeordnet, die ebenfalls einen lokalen Speicher 25 aufweist.

Die lokalen Speicher 4a, 5a, 25 der **Endgerätesteuereinheiten** 4 oder der **Leitungssteuereinheiten 5** oder der Prozessoreinheit 23, die einen standard Prozessor (General Purpose Processor) enthält, können vorzugsweise entweder als prozessorinterner Cache-Speicher 30 oder als prozessorexterner **RAM-Speicher** 29 ausgeführt sein, wobei die dienstgütespezifischen Daten 27 sowohl in den lokalen Speichern 4a, 5a als auch in dem zentralen Speicher 8 der **Netzwerkknoten-Vorrichtung** 3 in tabellarischer Form vorliegen.

Die **Netzwerkknoten-Vorrichtung** 3 ist entweder in eine räumlich fixierte Basisstation oder in ein mobiles Endgerät integrierbar.

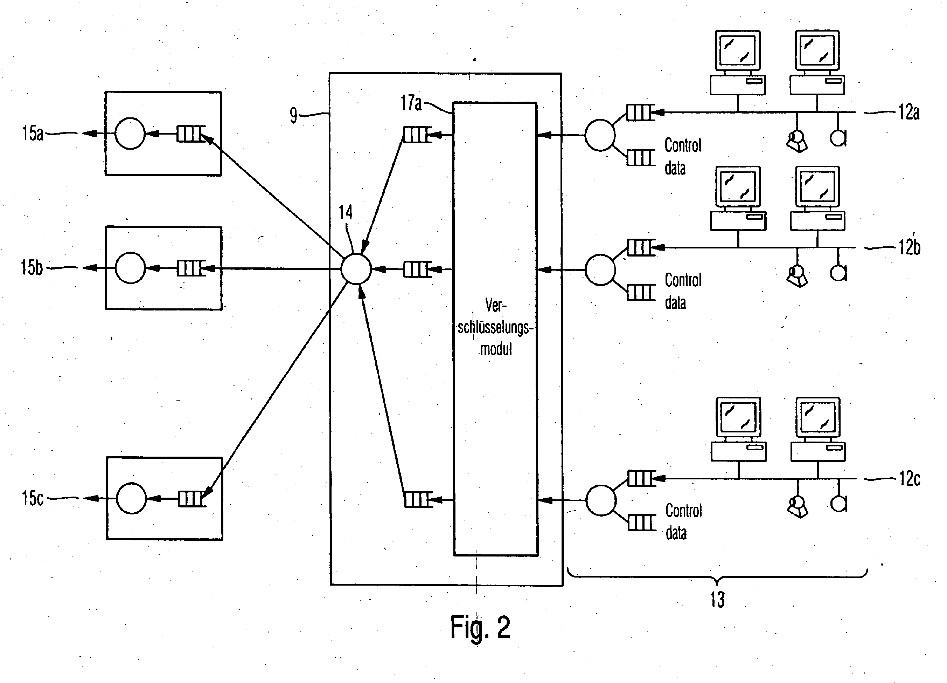

Fig. 2 zeigt ein Schema eines Steuerprogramms 9 mit einem **Verschlüsselungsmodul 17a für** verschieden klassifizierte Datenströme 12a, 12b, 12c. **Auf der Eingangsseite 13 kommen** verschiedene **unverschlüsselte** Datenströme 12a, 12b, 12c an, die sich anhand der Anwendung, des Absenders bzw. Empfängers oder anhand des Datentyps (Nutzdaten oder Signalisierungsdaten bzw. Kontrolldaten) in verschiedene **Dienstgüteklassen** klassifizieren lassen. In dem Steuerprogramm 9, das der zentralen Vorrichtung 7 der erfindungsgemäßen **Netzwerkknoten-Vorrichtung** 3 entspricht, werden alle ankommenden Datenströme 12a, 12b, 12c **verschlüsselt** und einer Auswertevorrichtung 14 **für dienstgütespezifische** Daten 27 zugeführt. An dieser Auswertevorrichtung 14 werden die verschlüsselten Datenpakete der **ankommenden** Datenströme 12a, 12b, 12c anhand ihrer verschlüsselten dienstgütespezifischen Daten 27 auf verschiedene Datenströme 15a, **15b, 15c,** die auch unterschiedliche Zieladressen **aufweisen,** verteilt.

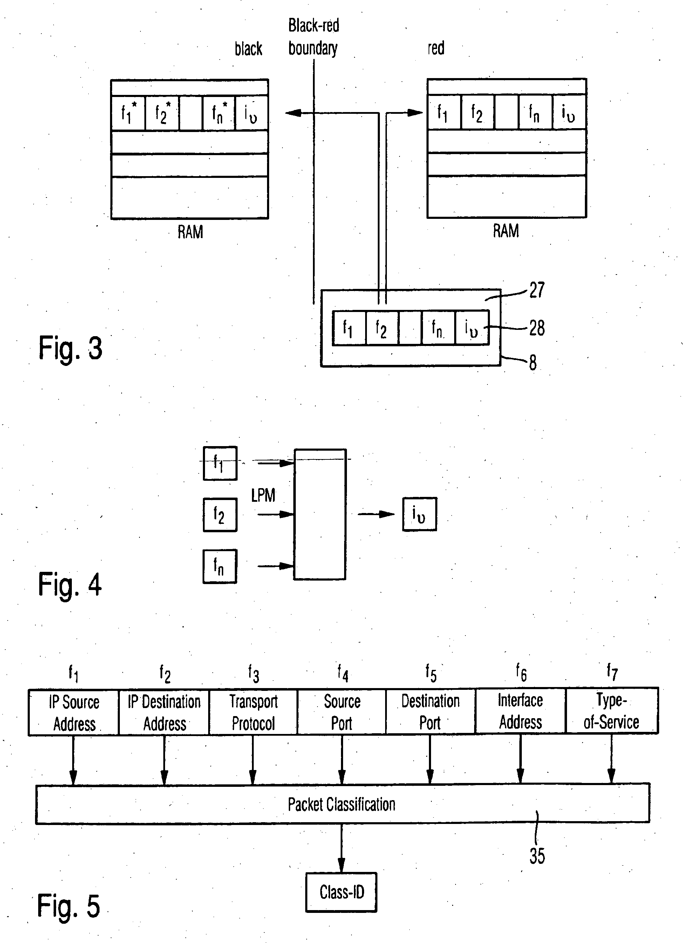

Fig. 3 zeigt einen lokalen Speicher 5a einer Leitungssteuereinheit 5 und einen zentralen Speicher 8 der erfindungsgemäßen Netzwerkknoten-Vorrichtung 3. In einem RAM-Speicher 29, der in dem Bereich 20 mit unverschlüsselten Datenströmen liegt, ist eine Tabelle mit dienstgütespezifischen Daten 27 aller über das Kommunikationsnetz 1 möglichen Verbindungen abgelegt. Eine Tabellenzeile, die einer Teilmenge 28 der dienstgütespezifischen Daten 27 aller über das Kommunikationsnetz möglichen Verbindungen entspricht, enthält die dienstgütespezifischen Parameter f₁, f₂, f₃, . . . . . fₙ, die als Dienstgüteklasse iᵥ klassifiziert werden. Wird die Dienstgüteklasse über die Schnittstelle 21 übertragen, so wird sie vorher verschlüsselt und als n-Tupel f₁*, f₂*, f₃*, .....fₙ* in dem lokalen Speicher 5a der Leitungssteuereinheit 5 abgelegt.

Fig. 4 zeigt eine schematische Darstellung der Ermittlung der Dienstgüteklasse aus unterschiedlichen dienstgütespezifischen Daten eines Datenstroms. Die dienstgütespezifischen Parameter f₁, f₂ und fₙ werden aus einem Header eines Datenpakets eines Datenstroms extrahiert und dienen als Eingangsparameter für einen Suchalgorithmus zur Ermittlung der Dienstgüteklasse. Der in der Erfindung bevorzugt implementierte Suchalgorithmus ist der Longest-Prefix-Match (LPM) Algorithmus.

Fig. 5 zeigt eine Zuordnung von ausgewählten dienstgütespezifischen Parametern f₁, f₂, f₃, f₄, f₅, f₆ und f₇ im Header eines Datenpakets zu einer definierten Dienstgüteklasse. Die dienstgütespezifischen Parameter, bzw. Datenfelder in einem Header f₁, f₂ entsprechen einer IP Adresse einer Datenquelle bzw. einer Datensenke. Das Datenfeld f₃ im Header gibt das Transportprotokoll des weiterzuleitenden Datenpakets an. Die Datenfelder f₄ und f₅ enthalten die physikalischen Adressen der empfangenden und versendenden Hardware-Einheiten. Das Datenfeld f₆ bezieht sich auf die Adresse der Hardware-Schnittstelle und das Datenfeld f₇ gibt den Diensttyp an.

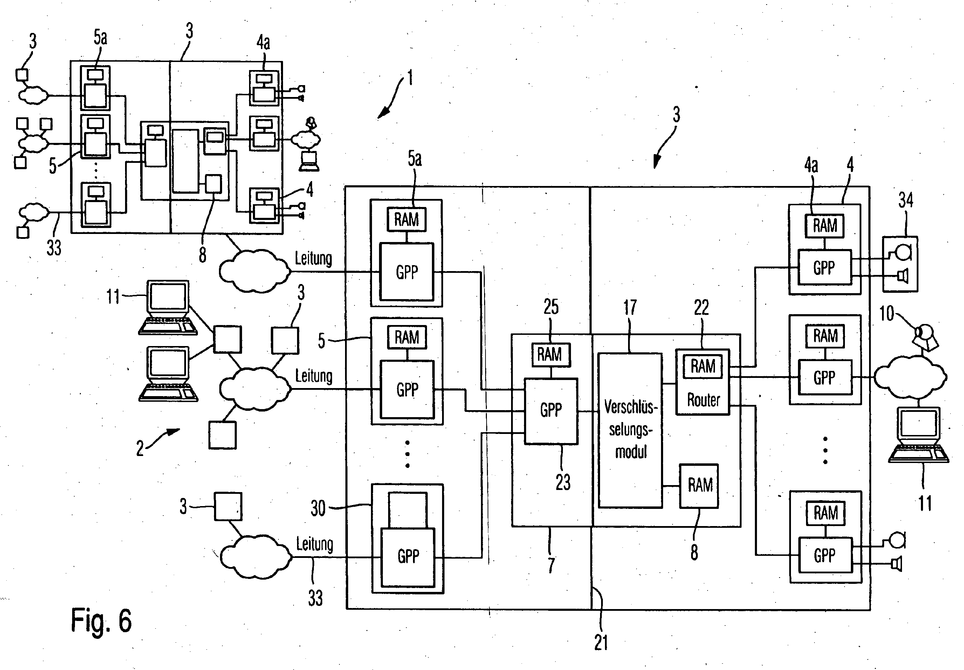

Fig. 6 zeigt ein erfindungsgemäßes Kommunikationsnetz 1 mit zwei im Detail dargestellten erfindungsgemäßen Netzwerkknoten-Vorrichtungen 3. Das Kommunikationsnetz 1 besteht aus einer variablen Topologie 2 von Netzwerkknoten-Vorrichtungen 3, die über Netzwerkweiterleitungsmechanismen verfügen, wobei die Netzwerkknoten-Vorrichtungen 3 Endgerätesteuereinheiten 4 und Leitungssteuereinheiten 5 aufweisen, und die Topologie 2 des Kommunikationsnetzes 1 sich während des Betriebs mit der Zeit ändert (ad-hoc Netz).

Über die Leitungssteuereinheiten 5 besteht eine Verbindung zu einer Leitung 33 des Kommunikationsnetzes 1 und über die Endgerätesteuereinheiten 4 sind Endgeräte 34 anschließbar. Dabei stellen die Endgerätesteuereinheiten 4 für Datenquellen 10 als auch für Datensenken 11, 34 Gatewayprozessorknotenpunkte dar.

Die Leitungssteuereinheiten 5 sind über eine zentrale Vorrichtung 7 mit den Endgerätesteuereinheiten 4 verbunden. Die zentrale Vorrichtung 7 weist einen zentralen Speicher 8 auf, in welchem dienstgütespezifischen Daten 27 aller über das Kommunikationsnetz 1 möglichen Verbindungen gespeichert sind. Die Endgerätesteuereinheiten 4 und die Leitungssteuereinheiten 5 haben jeweils nur einen lokalen Speicher 4a, 5a, der auf Anfrage bei dem zentralen Speicher 8 der Netzwerkknoten-Vorrichtung 3 dynamisch mit einer Teilmenge 28 der dienstgütespezifischen Daten 27 des zentralen Speichers 8 aktualisierbar ist, wobei die angefragten dienstgütespezifischen Daten 27 von dem zentralen Speicher 8 der Netzwerkknoten-Vorrichtung 3 zu dem lokalen Speicher 5a der Leitungssteuereinheiten 5 verschlüsselt übertragen werden.

Die von einem lokalen Speicher 4a einer Endgerätesteuereinheit 4 angefragten dienstgütespezifischen Daten 27 werden von dem zentralen Speicher 8 der Netzwerkknoten-Vorrichtung unverschlüsselt an den anfragenden lokalen Speicher 4a weitergereicht.

In den zentralen Vorrichtungen 7 der Netzwerkknoten-Vorrichtungen 3 sind Verschlüsselungsfunktionen und Entschlüsselungsfunktionen implementiert, so dass sowohl Nutzdaten als auch Netzwerktopologieinformationen und dienstgütespezifische Daten 27 zur Laufzeit verschlüsselt bzw. entschlüsselt werden. Eine Verschlüsselung bzw. Entschlüsselung dieser Daten zu ihrer Laufzeit impliziert keine Verzögerung der entsprechenden Datenströme.

Das erfindungsgemäße Kommunikationsnetz 1 unterstützt eine Vielzahl von Anwendungen, wie Datentransfer, Sprachkommunikation und Videokommunikation, wobei die verschiedenen Anwendungen an den Netzwerkknoten-Vorrichtungen 3 auf Grund ihrer unterschiedlichen dienstgütespezifischen Daten 27 unterschiedlich schnell weiterverarbeitet werden, so dass echtzeitkritische Datenströme, wie z.B. Datenströme einer Videokommunikation priorisiert behandelt werden.

Ein erfindungsgemäßes Verfahren zum Betreiben eines Kommunikationsnetzes 1, das aus einer variablen Topologie 2 von Netzwerkknoten-Vorrichtungen 3 besteht, erstreckt sich unter anderem auf die Aktualisierung von dienstgütespezifischen Daten 27 innerhalb des erfindungsgemäßen Kommunikationsnetzes 1, wobei die lokalen Speicher 4a, 5a von Endgerätesteuereinheiten 4, und Leitungssteuereinheiten 5 dynamisch mit einer Teilmenge 28 der dienstgütespezifischen Daten 27 aus dem zentralen Speicher 8 der Netzwerkknoten-Vorrichtung 3 auf Anfrage aktualisiert werden. Die Anfrage eines lokalen Speichers 4a, 5a bezüglich einer unbekannten Dienstgüteklasse wird dann generiert, wenn die Dienstgütezuordnungsregel 35 eines ankommenden Datenpakets nicht im lokalen Speicher 4a, 5a enthalten ist. Dies wird dadurch festgestellt, dass anhand der extrahierten Header-Daten des ankommenden Datenpakets z. B. eine LPM (Longest-Prefix-Match) Suche im lokalen Speicher 4a, 5a durchgeführt wird.

Eine Teilmenge 28 der dienstgütespezifischen Daten 27, die den Suchkriterien der im lokalen Speicher 4a, 5a durchgeführten LPM-Suche entspricht, wird von dem zentralen Speicher 8 verschlüsselt übertragen, wenn sich der anfragende lokale Speicher 5a an der Leitungssteuereinheit 5 derselben Netzwerkknoten-Vorrichtung 3 befindet.

Eine Teilmenge 28 der dienstgütespezifischen Daten 27 aus dem zentralen Speicher 8 wird unverschlüsselt übertragen, wenn sich der anfragende lokale Speicher 4a an der Endgerätesteuereinheit 4 derselben Netzwerkknoten-Vorrichtung 3 befindet.

Ist der lokale Speicher 5a bzw. 4a der Leitungssteuereinheit 5 bzw. der Endgerätesteuereinheit 4 aktualisiert, so werden ankommende Datenpakete anhand ihrer gerade in den lokalen Speicher 5a abgelegten Dienstgüteklasse, die eine Teilmenge 28 der Einträge im zentralen Speicher 8 ist, priorisiert bzw. in eine Warteschlange eingereicht.

Die Erfindung ist nicht auf das dargestellte Ausführungsbeispiel beschränkt und kann sowohl in einem paketvermittelnden Netz als auch in einem leitungsvermittelnden Netz angewendet werden.

## Patentansprüche

1. Kommunikationsnetz (1) bestehend aus einer Topologie (2) von Netzwerkknoten-Vorrichtungen (3), die über Netzwerkweiterleitungsmechanismen verfügen,
wobei die Netzwerkknoten-Vorrichtungen (3) Endgerätesteuereinheiten (4) und Leitungssteuereinheiten (5) aufweisen und über die Leitungssteuereinheiten (5) eine Verbindung zu einer Leitung (33) des Kommunikationsnetzes (1) besteht und über die Endgerätesteuereinheiten (4) Endgeräte (34) anschließbar sind,
wobei die Leitungssteuereinheiten (5) über eine zentrale Vorrichtung (7) mit den Endgerätesteuereinheiten (4) verbunden sind,
wobei die Netzwerkknoten-Vorrichtungen (3) jeweils einen zentralen Speicher (8) aufweisen, in welchem dienstgütespezifischen Daten (27) aller über die jeweilige Netzwerkknoten-Vorrichtung (3) möglichen Verbindungen gespeichert sind,
wobei die Endgerätesteuereinheiten (4) und die Leitungssteuereinheiten (5) jeweils einen lokalen Speicher (4a, 5a) aufweisen, die auf Anfrage bei dem zentralen Speicher (8) dynamisch mit einer Teilmenge (28) der dienstgütespezifischen Daten (27) des zentralen Speichers (8) aktualisierbar sind,
wobei sich der zentrale Speicher (8) und der zu jeder Endgerätesteuereinheit (4) gehörige lokale Speicher (4a) in einem unverschlüsselten Bereich (20) und der zu jeder Leitungssteuereinheit (5) gehörige lokale Speicher (5a) in einem vom unverschlüsselten Bereich (20) durch ein Verschlüsselungsmodul (20) getrennten verschlüsselten Bereich (19) befindet, so dass eine verschlüsselte Übertragung von dienstgütespezifischen Daten (27) zu den Leitungssteuereinheiten (5) und gleichzeitig eine unverschlüsselte Übertragung von dienstgütespezifischen Daten (27) zu den Endgerätesteuereinheiten (4) gewährleistet ist,
wobei angefragte dienstgütespezifische Daten (27) von dem zentralen Speicher (8) zu dem jeweils anfragenden, der Netzwerkknoten-Vorrichtung (3) zugeordneten lokalen Speicher (5a) der Leitungssteuereinheiten (5) zur Laufzeit übertragen werden, wobei die dienstgütespezifischen Daten (27) im sicherheitskritischen Bereich der Netzwerkknoten-Vorrichtung (3) verschlüsselt übertragen, verarbeitet und gespeichert werden, und
wobei angefragte dienstgütespezifische Daten (27) von dem zentralen Speicher (8) zu dem lokalen Speicher (4a) der Endgerätesteuereinheiten (4) unverschlüsselt weitergereicht werden.

2. Kommunikationsnetz nach Anspruch 1,
**dadurch gekennzeichnet,**
**dass** Verschlüsselungsfunktionen und Entschlüsselungsfunktionen in der zentralen Vorrichtung (7) der Netzwerknoten-Vorrichtungen (3) implementiert sind.

3. Kommunikationsnetz nach Anspruche 1 oder 2,
**dadurch gekennzeichnet,**
**dass** die Topologie (2) des Kommunikationsnetzes (1) während des Betriebs sich mit der zeit ändert.

4. Kommunikationsnetz nach einem der Ansprüche 1 bis 3,
**dadurch gekennzeichnet,**
**dass** die Endgerätesteuereinheiten (4) für Datenquellen (10) als auch für Datensenken (11, 34) einen lokalen Gatewayprozessorknotenpunkt darstellen.

5. Kommunikationsnetz nach einem der Ansprüche 1 bis 4,
**dadurch gekennzeichnet,**
**dass** zur Suche der dienstgütespezifischen Daten (27) in dem zentralen Speicher (8) der Suchalgorithmus "Longest-Prefix-Match" (LPM) implementiert ist.

6. Netzwerkknoten-Vorrichtung (3) zur Übertragung von dienstgütespezifischen Daten (27)
mit Endgerätesteuereinheiten (4), Leitungssteuereinheiten (5), und einem zentralen Speicher (8),
wobei über die Leitungssteuereinheiten (5) eine Verbindung zu einer Leitung (33) eines Kommunikationsnetzes (1) besteht und über die Endgerätesteuereinheiten (4) Endgeräte (34) anschließbar sind,
wobei die Leitungssteuereinheiten (5) über eine zentrale Vorrichtung (7) mit den Endgerätesteuereinheiten (4) verbunden sind,
wobei in dem zentralen Speicher (8) dienstgütespezifische Daten (27) aller über die Netzwerkknoten-Vorrichtung (3) möglichen Verbindungen gespeichert sind,
wobei die Endgerätesteuereinheiten (4) und die Leitungssteuereinheiten (5) jeweils einen lokalen Speicher (4a, 5a) aufweisen, die auf Anfrage bei dem zentralen Speicher (8) dynamisch mit einer Teilmenge (28) der dienstgütespezifischen Daten (27) des zentralen Speichers (8) aktualisierbar sind,
wobei sich der zentrale Speicher (8) und der zu jeder Endgerätesteuereinheit (4) gehörige lokale Speicher (4a) in einem unverschlüsselten Bereich (20) und der zu jeder Leitungssteuereinheit (5) gehörige lokale Speicher (5a) in einem vom unverschlüsselten Bereich (20) durch ein Verschlüsselungsmodul (20) getrennten verschlüsselten Bereich (19) befindet, so dass eine verschlüsselte Übertragung von dienstgütespezifischen Daten (27) zu den Leitungssteuereinheiten (5) und gleichzeitig eine unverschlüsselte Übertragung von dienstgütespezifischen Daten (27) zu den Endgerätesteuereinheiten (4) gewährleistet ist,
wobei angefragte dienstgütespezifische Daten (27) von dem zentralen Speicher (8) zu dem jeweils anfragenden, der Netzwerkknoten-Vorrichtung (3) zugeordneten lokalen Speicher (5a) der Leitungssteuereinheiten (5) zur Laufzeit übertragen werden, wobei die dienstgütespezifischen Daten (27) im sicherheitskritischen Bereich der Netzwerkknoten-Vorrichtung (3) verschlüsselt übertragen, verarbeitet und gespeichert werden, und
wobei die von dem lokalen Speicher (4a) der Endgerätesteuereinheiten (4) angefragten dienstgütespezifischen (27) Daten von dem zentralen Speicher (8) zu dem lokalen Speicher (4a) der Endgerätesteuereinheiten (4) an der Netzwerkknoten-Vorrichtung (3) unverschlüsselt weitergereicht werden.

7. Netzwerkknoten-Vorrichtung nach Anspruch 6,
**dadurch gekennzeichnet,**
**dass** ein Bereich mit verschlüsselten Datenströmen (19) von einem Bereich mit unverschlüsselten Datenströmen (20) abgegrenzt ist.

8. Netzwerkknoten-Vorrichtung nach Anspruch 7,
**dadurch gekennzeichnet,**
**dass** in der zentralen Vorrichtung (7) ein Verschlüsselungsmodul (17) als Schnittstelle (21) zwischen den beiden Bereichen (19, 20) angeordnet ist.

9. Netzwerkknoten-Vorrichtung nach Anspruch 7 oder 8,
**dadurch gekennzeichnet,**
**dass** in dem Bereich mit unverschlüsselten Datenströmen (20) das Verschlüsselungsmodul (17) mit dem zentralen Speicher (8) verbunden ist und über einen integrierten, vermittelnden Netzknoten (22) mit den Endgerätesteuereinheiten (4) verbunden ist.

10. Netzwerkknoten-Vorrichtung nach einem der Ansprüche 6 bis 9,
**dadurch gekennzeichnet,**
**dass** in der zentralen Vorrichtung (7) eine mit dem Verschlüsselungsmodul (17) verbundene Prozessoreinheit (23) mit einem lokalen Speicher (25) vorhanden ist.

11. Netzwerkknoten-Vorrichtung nach einem der Ansprüche 6 bis 10,
**dadurch gekennzeichnet,**
**dass** in dem zentralen Speicher (8) dienstgütespezifische Daten (27) in tabellarischer Form vorliegen.

12. Netzwerkknoten-Vorrichtung nach einem der Ansprüche 6 bis 11,
**dadurch gekennzeichnet,**
**dass** die lokalen Speicher (4a, 5a, 25) prozessorexterne RAM-Speicher (29) oder prozessorinterne CacheSpeicher (30) sind.

13. Netzwerkknoten-Vorrichtung nach einem der Ansprüche 6 bis 12,
**dadurch gekennzeichnet,**
**dass** die Netzwerkknoten-Vorrichtung (3) entweder in einer räumlich fixierten Basisstation oder in einem mobilen Endgerät integriert ist.

14. Netzwerkknoten-Vorrichtung nach einem der Ansprüche 6 bis 13,
**dadurch gekennzeichnet,**
**dass** zur Suche der dienstgütespezifischen Daten (27) in dem zentralen Speicher (8) der Such-Algorithmus "Longest-Prefix-Match" (LPM) implementiert ist.

15. Verfahren zum Betreiben eines Kommunikationsnetzes (1), das aus einer Topologie (2) von Netzwerkknoten-Vorrichtungen (3) besteht, die über Netzwerkweiterleitungsmechanismen verfügen,
wobei die Netzwerkknoten-Vorrichtungen (3) Endgerätesteuereinheiten (4) und Leitungssteuereinheiten (5) aufweisen und über die Leitungssteuereinheiten (5) eine Verbindung zu einer Leitung (33) des Kommunikationsnetzes (1) besteht und über die Endgerätesteuereinheiten (4) Endgeräte (34) anschließbar sind,
wobei die Leitungssteuereinheiten (5) über eine zentrale Vorrichtung (7) mit den Endgerätesteuereinheiten (4) verbunden sind,
wobei die Netzwerkknoten-Vorrichtungen (3) des Kommunikationsnetzes (1) jeweils einen zentralen Speicher (8) aufweisen, in welchem dienstgütespezifischen Daten (27) aller über die jeweilige Netzwerkknoten-Vorrichtung (3) möglichen Verbindungen gespeichert sind,
wobei das Verfahren folgende Verfahrensschritte umfasst
- die lokalen Speicher (4a, 5a) werden dynamisch mit einer Teilmenge (28) der dienstgütespezifischen Daten (27) aus den zentralen Speichern (8) aktualisiert,
- eine Teilmenge (28) der dienstgütespezifischen Daten (27) aus dem zugehörigen zentralen Speicher (8) wird auf Anfrage eines lokalen Speichers (4a, 5a) übertragen,
- eine Anfrage eines lokalen Speichers (4a, 5a) bezüglich einer unbekannten Dienstgüteklasse wird dann generiert, wenn die Dienstgüteklasse eines ankommenden Datenstroms nicht im lokalen Speicher (4a, 5a) enthalten ist,
wobei die Übertragung von dienstgütespezifischen Daten (27) zwischen dem zentralen Speicher (28) und dem zu jeder Endgerätesteuereinheit (5) gehörigen lokalen Speicher (5a) in einem unverschlüsselten Bereich (20) unverschlüsselt erfolgt und gleichzeitig die Übertragung von dienstgütespezifischen Daten (27) zwischen dem zentralen Speicher und dem in einem verschlüsselten Bereich (19) befindlichen und zu jeder Leitungssteuereinheit (4) gehörigen lokalen Speicher (4a) mittels Zwischenschaltung eines Verschlüsselungsmoduls (17) verschlüsselt erfolgt, wobei eine Teilmenge (28) der dienstgütespezifischen Daten (27) aus dem zentralen Speicher (8) verschlüsselt zur Laufzeit übertragen wird, wenn der anfragende lokale Speicher (5a) an der Leitungssteuereinheit (5) derselben Netzwerkknoten-Vorrichtung (3) vorhanden ist, und
wobei eine Teilmenge (28) der dienstgütespezifischen Daten (27) aus dem zentralen Speicher (8) unverschlüsselt zur Laufzeit übertragen wird, wenn der anfragende lokale Speicher (4a) an der Endgerätesteuereinheit (4) derselben Netzwerkknoten-Vorrichtung (3) vorhanden ist,
wobei die dienstgütespezifischen Daten (27) im sicherheitskritischen Bereich der Netzwerkknoten-Vorrichtung verschlüsselt verarbeitet und gespeichert werden.

16. Verfahren nach Anspruch 15,
**dadurch gekennzeichnet,**
**dass** in den Leitungssteuereinheiten (5) und in den Endgerätesteuereinheiten (4) ankommende Datenströme anhand ihrer Dienstgüteklasse priorisiert werden.

## Claims

1. Communications network (1) comprising a topology (2) of node devices (3), which provide network routing mechanisms,
wherein the node devices (3) provide terminal-control units (4) and line-control units (5), and a connection to a line (33) of the communications network (1) is provided via the line-control units (5), and terminal devices (34) can be connected via the terminal-control units (4),
wherein the line-control units (5) are connected to the terminal-control units (4) via a central device (7), wherein the node devices (3) each provide a central memory (8), in which quality-of-service-specific data (27) for all connections possible via the respective node device (3) are stored,
wherein the terminal-control units (4) and the line-control units (5) each provide a local memory (4a, 5a), which can be dynamically updated on request to the central memory (8) with a subset (28) of quality-of-service-specific data (27) from the central memory (8), wherein the central memory (8) and the local memory (4a) associated with each terminal-control unit (4) is disposed in an un-coded region (20), and the local memory (5a) associated with each line-control unit (5) is disposed in a coded region separated from the un-coded region (20) by an encoding module (20), so that a coded transmission of quality-of-service-specific data (27) to the line-control units (5) and, at the same time, an un-coded transmission of quality-of-service-specific data (27) to the terminal-control units (4) is guaranteed,
wherein requested quality-of-service-specific data (27) are transmitted from the central memory (8) to the respectively requesting local memory (5a) of the line-control units (5) allocated to the node device (3) at the run-time, wherein the quality-of-service-specific data (27) are transmitted in an encoded manner,
processed and stored in the security-critical region of the node device (3), and
wherein requested quality-of-service-specific data (27) are rerouted in an un-coded manner from the central memory (8) to the local memory (4a) of the terminal-control units (4).

2. Communications network according to claim 1,
**characterised in that**
the coding and decoding functions are implemented in the central device (7) of the node devices (3).

3. Communications network according to claims 1 or 2,
**characterised in that**
the topology (2) of the communications network (1) changes over time during operation.

4. Communications network according to any one of claims 1 to 3,
**characterised in that**
the terminal-control units (4) represent a local gateway-processor node for data sources (10) and also for data sinks (11, 34).

5. Communications network according to any one of claims 1 to 4,
**characterised in that**
the "longest-prefix-match" (LPM) search algorithm is implemented for the search for quality-of-service-specific data (27) in the central memory (8).

6. Node device (3) for the transmission of quality-of-service-specific data (27) with terminal-control units (4), line-control units (5) and a central memory (8), wherein a connection to a line (33) of a communications network (1) is provided via the line-control units (5), and terminal-devices (34) can be connected via the terminal-control units (4),
wherein the line-control units (5) are connected to the terminal-control units (4) via a central device (7), wherein quality-of-service-specific data (27) for all connections possible via the node device (3) are stored in the central memory (8), and
wherein the terminal-control units (4) and the line-control units (5) each provide a local memory (4a, 5a), which can be dynamically updated with a subset (28) of the quality-of-service-specific data (27) of the central memory (8),
wherein the central memory (8) and the local memory (4a) associated with each terminal-control unit (4) is disposed in an un-coded region (20), and the local memory (5a) associated with each line-control unit (5) is disposed in a coded region separated from the un-coded region (20) by an encoding module (20), so that a coded transmission of quality-of-service-specific data (27) to the line-control units (5) and, at the same time, an un-coded transmission of quality-of-service-specific data (27) to the terminal-control units (4) is guaranteed,
wherein requested quality-of-service-specific data (27) are transmitted from the central memory (8) to the respectively requesting local memory (5a) of the line-control units (5) assigned to the node device (3) at the run-time, wherein the quality-of-service-specific data (27) are transmitted in an encoded manner, processed and stored in the security-critical region of the node device (3), and
wherein quality-of-service-specific data (27) requested by the local memory (4a) of the terminal-control units (4) are rerouted in an un-coded manner from the central memory (8) to the local memory (4a) of the terminal-control units (4) in the node device (3).

7. Node device according to claim 6,
**characterised in that**
a region with coded datastreams (19) is demarcated from a region with un-coded datastreams (20).

8. Node device according to claim 7,
**characterised in that**
a coding module (17) is disposed in the central device (7) as an interface (21) between the two regions (19, 20).

9. Node device according to claim 7 or 8,
**characterised in that**
the coding module (17) is connected to the central memory (8) in the region with un-coded datastreams (20), and connected to the terminal-control units (4) via an integrated, intermediate network node (22).

10. Node device according to any one of claims 6 to 9,
**characterised in that**
a processor unit (23) with a local memory (25) connected to the coding module (17) is provided in the central device (7).

11. Node device according to any one of claims 6 to 10,
**characterised in that**
quality-of-service-specific data (27) are provided in tabular form in the central memory (8).

12. Node device according to any one of claims 6 to 11,
**characterised in that**
the local memories (4a, 5a, 25) are processor-external RAM memories (29) or processor-internal cache memories (30).

13. Node device according to any one of claims 6 to 12,
**characterised in that**
the node device (3) is integrated either in a spatially fixed base-station or in a mobile terminal device.

14. Node device according to any one of claims 6 to 13,
**characterised in that**
the "longest-prefix-match" (LPM) search algorithm is implemented in the central memory (8) for the search for quality-of-service-specific data (27).

15. Method for the operation of a communications network (1), which comprises a topology (2) of node devices (3), which provide network-routing mechanisms,
wherein the node devices (3) provide terminal-control units (4) and line-control units (5), and a connection to a line (33) of the communications network (1) is provided via the line-control units (5), and terminal devices (34) can be connected via the terminal-control units (4),
wherein the line-control units (5) are connected to the terminal-control units (4) via a central device (7), wherein the node devices (3) of the communications network (1) each provide a central memory (8), in which quality-of-service-specific data (27) of all connections possible via the respective node device (3) are stored, wherein the method comprises the following method steps:
- the local memories (4a, 5a) are dynamically updated with a subset (28) of quality-of-service-specific data (27) from the central memories (8),
- a subset (28) of quality-of-service-specific data (27) is transmitted from the associated central memory (8) upon request from a local memory (4a, 5a),
- a request from a local memory (4a, 5a) regarding an unknown quality-of-service class is generated, if the quality-of-service class of an incoming datastream is not contained in the local memory (4a, 5a),
wherein the transmission of quality-of-service-specific data (27) between the central memory (28) and the local memory (5a) associated with each terminal-control unit (5) is implemented in an un-coded manner in an un-coded region (20), and, at the same time, the transmission of quality-of-service-specific data (27) between the central memory and the local memory (4a) disposed in an encoded region (19) and associated with every line-control unit (4) is implemented by means of intermediate connection of an encoding module (17),
wherein a subset (28) of the quality-of-service-specific data (27) is transmitted from the central memory (8) in an encoded manner at the run-time, if the requesting local memory (5a) is present in the line-control unit (5) of the same node device (3), and
wherein a subset (28) of quality-of-service specific data (27) is transmitted from the central memory (8) in an un-coded manner at the run-time, if the requesting local memory (4a) is present in the terminal-control unit (4) of the same node device (3),
wherein the quality-of-service-specific data (27) are encoded, processed and stored in the security-critical region of the node device.

16. Method according to claim 15,
**characterised in that**
incoming datastreams in the line-control units (5) and in the terminal-control units (4) are prioritised on the basis of their quality-of-service class.

## Revendications

1. Réseau de communication (1) constitué d'une topologie (2) de dispositifs de noeud de réseau (3), qui disposent de mécanismes de transmission de réseau,
dans lequel les dispositifs de noeud de réseau (3) présentent des unités de contrôle de terminal (4) et des unités de contrôle de ligne (5) et une liaison vers une ligne (33) du réseau de communication (1) est possible par l'intermédiaire des unités de contrôle de ligne (5) et les terminaux (34) peuvent être connectés par l'intermédiaire des unités de contrôle de terminal (4),
dans lequel les unités de contrôle de ligne (5) sont reliées aux unités de contrôle de terminal (4) par l'intermédiaire d'un dispositif central (7),
dans lequel les dispositifs de noeud de réseau (3) présentent respectivement une mémoire centrale (8), dans laquelle les données spécifiques à la qualité de service (27) de toutes les liaisons possibles par l'intermédiaire du dispositif de noeud de réseau respectif (3) sont stockées,
dans lequel les unités de contrôle de terminal (4) et des unités de contrôle de ligne (5) présentent respectivement une mémoire locale (4a, 5a), qui peuvent être actualisées de manière dynamique avec un sous-ensemble (28) des données spécifiques à la qualité de service (27) de la mémoire centrale (8) sur demande auprès de la mémoire centrale (8),
dans lequel la mémoire centrale (8) et la mémoire locale (4a) associée à chaque unité de contrôle de terminal (4) se trouve dans une zone non cryptée (20) et la mémoire locale (5a) associée à chaque unité de contrôle de ligne (5) se trouve dans une zone (19) cryptée séparée de la zone non cryptée (20) par un module de cryptage (20), de sorte qu'une transmission cryptée de données spécifiques à la qualité de service (27) est garantie aux unités de contrôle de ligne (5) et simultanément une transmission non cryptée des données spécifiques à la qualité de service (27) est garantie aux unités de contrôle de terminal (4),
dans lequel les données spécifiques à la qualité de service demandées (27) sont transmises en cours d'exécution de la mémoire centrale (8) à la mémoire locale demandée respective (5a) des unités de contrôle de ligne (5) et associée au dispositif de noeud de réseau (3) dans lequel les données spécifiques à la qualité de service (27) sont transmises cryptées, traitées et stockées dans une zone de sécurité du dispositif de noeud de réseau (3), et
dans lequel les données spécifiques à la qualité de service demandées (27) sont transférées non cryptées de la mémoire centrale (8) à la mémoire locale (4a) des unités de contrôle de terminal (4).

2. Réseau de communication selon la revendication 1, **caractérisé en ce que**
des fonctions de cryptage et des fonctions de décryptage sont mises en oeuvre dans le dispositif central (7) des dispositifs de noeud de réseau (3).

3. Réseau de communication selon la revendication 1 ou 2, **caractérisé en ce que**
la topologie (2) du réseau de communication (1) change avec le temps pendant le fonctionnement.

4. Réseau de communication selon l'une des revendications 1 à 3, **caractérisé en ce que**
les unités de contrôle de terminal (4) représentent un point nodal de processeur de passerelle local pour les sources de données (10) ainsi que pour les collecteurs de données (11, 34).

5. Réseau de communication selon l'une des revendications 1 à 4, **caractérisé en ce que**
l'algorithme de recherche "Longest-Prefix-Match" (LPM) est mis en oeuvre dans la mémoire centrale (8) en vue de la recherche des données spécifiques à la qualité de service (27).

6. Dispositif de noeud de réseau (3) pour la transmission de données spécifique à la qualité de service (27) comportant des unités de contrôle de terminal (4), des unités de contrôle de ligne (5), et une mémoire centrale (8),
dans lequel une liaison se compose d'une ligne (33) d'un réseau de communication (1) par l'intermédiaire des unités de contrôle de ligne (5) et les terminaux (34) peuvent être reliés par l'intermédiaire des unités de contrôle de terminal (4),
dans lequel les unités de contrôle de ligne (5) sont reliées aux unités de contrôle de terminal (4) par l'intermédiaire d'un dispositif central (7),
dans lequel des données spécifiques à la qualité de service (27) de toutes les liaisons possibles par l'intermédiaire du dispositif de noeud de réseau (3) sont mémorisées dans la mémoire centrale (8),
dans lequel les unités de contrôle de terminal (4) et les unités de contrôle de ligne (5) présentent respectivement une mémoire locale (4a, 5a), qui peuvent être actualisées de façon dynamique avec un sous-ensemble (28) des données spécifiques à la qualité de service (27) de la mémoire centrale (8) sur demande auprès de la mémoire centrale (8),
dans lequel la mémoire centrale (8) et la mémoire locale (4a) associées à chaque unité de contrôle de terminal (4) se trouvent dans une zone non cryptée (20) et la mémoire locale (5a) associée à chaque unité de contrôle de ligne (5) se trouve dans une zone cryptée (19) séparée de la zone non cryptée (20) par un module de cryptage (20), de sorte qu'une transmission cryptée de données spécifiques à la qualité de service (27) est garantie aux unités de contrôle de ligne (5) et simultanément une transmission non cryptée des données spécifique à la qualité de service (27) est garantie aux unités de contrôle de terminal (4),
dans lequel les données spécifiques à la qualité de service demandées (27) sont transmises en cours d'exécution de la mémoire centrale (8) à la mémoire locale (5a) demandée respective associée au dispositif de noeud de réseau (3), dans lequel les données spécifiques à la qualité de service (27) sont transmises de façon cryptée, traitées et mémorisées dans une zone de sécurité du dispositif de noeud de réseau (3), et
dans lequel les données spécifiques à la qualité de service (27) demandées par la mémoire locale (4a) des unités de contrôle de terminal (4) sont transmises non cryptées au dispositif de noeud de réseau (3) de la mémoire centrale (8) à la mémoire locale (4a) des unités de contrôle de terminal (4).

7. Dispositif de noeud de réseau selon la revendication 6, **caractérisé en ce que**
une zone avec des flux de données cryptés (19) est délimitée par une zone avec des flux de données non cryptés (20).

8. Dispositif de noeud de réseau selon la revendication 7, **caractérisé en ce que**
un module de cryptage (17) est disposé en tant qu'interface (21) entre les deux zones (19, 20) dans le dispositif central (7).

9. Dispositif de noeud de réseau selon la revendication 7 ou 8, **caractérisé en ce que**
le module de cryptage (17) est relié à la mémoire centrale (8) dans la zone avec les flux de données non cryptés (20) et est relié aux unités de contrôle de terminal (4) par l'intermédiaire d'un noeud de réseau de transmission intégré (22).

10. Dispositif de noeud de réseau selon l'une des revendications 6 à 9, **caractérisé en ce que**
une unité de processeur (23) reliée au module de cryptage (17) est prévue dans une mémoire locale (25) dans le dispositif central (7).

11. Dispositif de noeud de réseau selon l'une des revendications 6 à 10, **caractérisé en ce que**
des données spécifiques à la qualité de service (27) se présentent sous forme de tableau dans la mémoire centrale (8).

12. Dispositif de noeud de réseau selon l'une des revendications 6 à 11, **caractérisé en ce que**
les mémoires locales (4a, 5a, 25) sont des mémoires RAM externes au processeur (29) ou des mémoires cache internes au processeur (30).

13. Dispositif de noeud de réseau selon l'une des revendications 6 à 12, **caractérisé en ce que**
le dispositif de noeud de réseau (3) est intégré soit dans une station de base spatialement fixe soit dans un terminal mobile.

14. Dispositif de noeud de réseau selon l'une des revendications 6 à 13, **caractérisé en ce que**
l'algorithme de recherche "Longest-Prefix-Match" (LPM) est mis en oeuvre en vue de la recherche des données spécifiques à la qualité de service (27) dans la mémoire centrale (8).

15. Procédé de fonctionnement d'un réseau de communication (1), qui est constitué d'une topologie (2) de dispositifs de noeud de réseau (3), qui disposent de mécanismes de transmission de réseau,
dans lequel les dispositifs de noeud de réseau (3) présentent des unités de contrôle de terminal (4) et des unités de contrôle de ligne (5) et une liaison à une ligne (33) du réseau de communication (1) est effectuée par l'intermédiaire des unités de contrôle de ligne (5) et les terminaux (34) peuvent être reliés par l'intermédiaire des unités de contrôle de terminal (4),
dans lequel les unités de contrôle de ligne (5) sont reliées aux unités de contrôle de terminal (4) par l'intermédiaire d'un dispositif central (7),
dans lequel les dispositifs de noeud de réseau (3) du réseau de communication (1) présentent respectivement une mémoire centrale (8), dans laquelle des données spécifiques à la qualité de service (27) de toutes les liaisons possibles par l'intermédiaire du dispositif de noeud de réseau respectif (3) sont mémorisées,
dans lequel le procédé comprend les étapes de procédé suivantes
- les mémoires locales (4a, 5a) sont actualisées de façon dynamique avec un sous-ensemble (28) des données spécifiques à la qualité de service (27) provenant de la mémoire centrale (8),
- une partie (28) des données spécifiques à la qualité de service (27) provenant de la mémoire centrale associée (8) est transmise sur demande d'une mémoire locale (4a, 5a),
- une demande d'une mémoire locale (4a, 5a) est ensuite générée par rapport à une classe de qualité de service inconnue, si la classe de qualité de service d'un flux de données arrivant n'est pas contenue dans la mémoire locale (4a, 5a),
dans lequel la transmission des données spécifiques à la qualité de service (27) s'effectue de manière non cryptée dans une zone non cryptée (20) entre la mémoire centrale (28) et la mémoire locale (5a) associées à chaque unité de contrôle de terminal (5) et simultanément la transmission de données spécifiques à la qualité de service (27) s'effectue de manière cryptée au moyen de l'interposition d'un module de cryptage (17) entre la mémoire centrale et la mémoire locale (4a) associées à chaque unité de contrôle de ligne (4) et se trouvant dans une zone cryptée (19),
dans lequel une partie (28) des données spécifiques à la qualité de service (27) provenant de la mémoire centrale (8) est transmise de manière cryptée en cours d'exécution, lorsque la mémoire locale requérante (5a) est présente dans l'unité de contrôle de ligne (5) du même dispositif de noeud de réseau (3), et
dans lequel une partie (28) des données spécifiques à la qualité de service (27) provenant de la mémoire centrale (8) est transmise de manière non cryptée en cours d'exécution, lorsque la mémoire locale requérante (4a) est présente dans l'unité de contrôle de terminal (4) de ce même dispositif de noeud de réseau (3),
dans lequel les données spécifiques à la qualité de service (27) sont traitées de manière cryptée et mémorisées dans une zone de sécurité du dispositif de noeud de réseau.

16. Procédé selon la revendication 15, **caractérisé en ce que**
les flux de données arrivant dans les unités de contrôle de ligne (5) et dans les unités de contrôle de terminal (4) sont prioritaires en ce qui concerne leur classe de qualité de service.
